# EUROPEAN PATENT SPECIFICATION

(11) **EP 3 267 212 B1**
(45) Date of publication and mention of the grant of the patent: **12.12.2018**
(21) Application number: 16178653.8
(22) Date of filing: 08.07.2016
(51) Int. Cl.: G01R 31/26, H02S 50/10, E06B 5/00, E06B 9/08, E06B 9/24, E04D 13/035

(54) **METHOD FOR PRODUCING SOLAR POWERED SCREENING DEVICES FOR WINDOWS**
VERFAHREN ZUR HERSTELLUNG SOLARBETRIEBENER ABSCHIRMVORRICHTUNGEN FÜR FENSTER
PROCÉDÉ DE PRODUCTION DE DISPOSITIFS DE CRIBLAGE ALIMENTÉ PAR ÉNERGIE SOLAIRE POUR FENÊTRES

(43) Date of publication of application: 10.01.2018
(73) Proprietor: VKR Holding A/S, 2970 Hørsholm (DK)
(72) Inventor: THOMSEN, Jan, 6950 Ringkøbing (DK)
(74) Representative: Patentgruppen A/S

(56) References cited:
- US-A1- 2010 332 167
- US-A1- 2011 162 809
- US-A1- 2012 049 879

## Description

### Field of the invention

The invention relates to devices such as screening devices and windows to be used in buildings, particularly to devices which include a motorized function.

### Background of the invention

Devices such as roller shutters and windows may comprise a solar panel for the purpose of providing energy for a motorized function of the device, e.g. a function for moving the shutters. The energy produced by the solar panel may be accumulated in a battery so that when there is a need to perform the motorized function, the needed electrical power can be delivered by the battery.

Patent application US2011/0162809 A1 discloses a solar-powered automated system for the operation of drapery, roller blinds, and similar window coverings. The above mentioned patent application proposes to select an appropriate solar panel based on the intended location of the system.

However, in some locations where the device is installed or at specific seasons of the year the amount of available solar energy is so low that the battery may not be sufficiently charged to be able to deliver the amount of energy required for performing the motorized function.

The problem could be solved by providing alternative sources of electrical energy such as pre-charged batteries or additional solar panels. However, pre-charged batteries need to be replaced and additional solar panels add production costs to the device.

Accordingly, there is a need to address the problem with solar powered devices such as roller shutters and windows used in areas with limited amount of solar energy.

### Summary of the invention

It is an object of the invention to provide a method for producing solar powered screening devices and windows so that they can be used in areas with limited amount of solar energy and so that the limited amount of solar energy can be used for powering a motorised function of the screening devices and windows.

In a first aspect of the invention there is provided a method for for selecting a solar panel for the production of a motor operated device for use in a window-opening in a building, where the motor operated device comprises an electric motor for operating the motor operated device, a rechargeable electric storage unit for powering the electric motor, and the solar panel for charging the rechargeable electric storage unit, where the method comprises
- choosing a candidate solar panel from a plurality of available solar panels,
- arranging the candidate solar panel so that light is substantially prohibited from entering a light receiving face of the candidate solar panel,
- applying a test voltage to the candidate solar panel,
- measuring an electrical current flowing through the candidate solar panel, where the current is induced by the test voltage, and
- conditioned on a result of a comparison performed based on the measured current and a test reference, selecting the candidate solar panel for the production of the motor operated device.

The test reference is a reference which quantitatively or qualitatively defines a desired capability of the solar panel to produce an electrical quantity, e.g. power or energy, which is sufficient to power the motor for performing a given function or functions of the motor operated device.

The test reference may define the desired capability to produce the electrical quantity under a given light condition, e.g. a light condition which relates to the available sun light intensity. Particularly, the capability to produce the electrical quantity under low light conditions, e.g. where the average sun light intensity is below a given intensity value, where the low light conditions is specified by a location (e.g. latitude coordinate) and/or an orientation of the solar panel)

Accordingly, the test reference may relate to a desired electrical production capacity of the solar panel, specifically the electrical production capacity under given light conditions, e.g. low light conditions.

Similarly, the test voltage is applied and the current is measured in a way so that the measured current characterises the electrical production capacity of the candidate solar panel, specifically the electrical production capacity under light conditions which are the same or corresponds with the light conditions associated with the test reference.

Accordingly, the result of the comparison based on the measured current and the test reference can be used to select solar panels from a plurality of available solar panels which satisfy the desired electrical production capacity of the solar panel.

Thus, it is possible to produce motor operated devices, e.g. motor operated screening devices or windows, which are intended to be installed at locations or under conditions which only provide a relatively low amount of solar energy, so that the produced motor-operated device is able to perform a given function based on electrical energy from the electric storage unit which is produced by the solar panel under the available light conditions.

The test voltage may be applied to the candidate solar panel so that the solar panel is reverse biased, alternatively so that the solar panel is forward biased. The use of forward and reverse biasing voltages may be advantageous for determining different measured currents which characterises different power production capabilities of the candidate solar panel. Accordingly, the test voltages may be applied sequentially so that the solar panel is sequentially reverse biased and forward biased in order to obtain different characteristics of the solar panel.

According to an embodiment, the motor operated device has an associated predetermined electrical consumption value for performing a minimum function of the motor operated device. The consumption value may be a power or energy value which characterises the power or energy needed to perform the minimum function, e.g. a predetermined automated or user-initiated function of the motor operated device which is driven by the motor.

According to an embodiment the minimum function is a predetermined operation of the motor operated device, and the electric motor is arranged to drive the predetermined operation.

According to an embodiment the predetermined electrical consumption value is available from a storage member comprised by the motor operated device. This may be an advantage since different motor operated devices may have different consumption values, e.g. dependent on a specific configuration such a type of shutters for a screening device. By means of the storage member, e.g. an RFID tag, the consumption value is easily obtained during production.

Alternatively, the associated predetermined electrical consumption value is available from a database. In this way the consumption value of a given motor operated device may be collected based on e.g. a type number of the motor operated device.

Advantageously, the predetermined electrical consumption value may be used for determining the test reference so the test reference reflects the electrical energy needs of the specific motor operated device.

According to an embodiment, the motor operated device comprises a movable part which can be driven by the motor, where the minimum function of the motor operated device relates to a predetermined motion of the movable part.

According to an embodiment the test reference is a test current. Accordingly, the measured test current may be directly compared with the test current to assess the electrical production capacity of the solar panel.

According to an embodiment the test current is determined dependent on a short circuit current parameter of the solar panel. Use of the short circuit current provides an easy and effective way of characterising the solar panel's electrical production capacity.

According to an embodiment, the test current Itest is in the form of an experimentally obtained test current which has been obtained based on measuring the current flowing through a reference solar panel in response to applying the test voltage, where the reference solar panel has a predetermined electrical production value.

The electrical production value may be a value in units of power, energy or other which characterises the panel's electrical production capacity. Accordingly, the test current may reflect the actual predetermined electrical production value or a derivative thereof. For example, the test current may be determined directly from a solar panel having a predetermined electrical production value which corresponds with a desired electrical production capacity so that the determined test current reflects the desired electrical production capacity. Alternatively, the test current may be determined indirectly from a measured current from a solar panel having a predetermined electrical production value, e.g. by adjusting the test current based on a difference between a desired electrical production capacity and the predetermined electrical production value of the solar panel, e.g. by extrapolating based on the difference.

According to an embodiment the predetermined electrical production value represents the electrical production when the solar panel is illuminated with a given light intensity. Thus, the predetermined electrical production value may be determined for a given reference solar panel by illuminating the solar panel with a known light intensity.

According to an embodiment, the predetermined electrical production value is sufficient for generating enough energy during a predetermined period of time for performing the minimum function of the motor operated device. Accordingly, the reference solar panel may be a solar panel having an electrical production capacity which satisfies the desired electrical production capacity.

For example, the predetermined electrical production value may correspond with or be greater than the predetermined electrical consumption value so that the predetermined electrical production value is sufficient for generating enough energy during a predetermined period of time for performing the minimum function of the motor operated device.

As described above, the test reference may comprise one or more test values. For example, the test reference may comprises a plurality of experimentally obtained test currents, which have been obtained based on measuring the current flowing through reference solar panels in response to applying the test voltage, where the reference solar panels are of the same type and has different electrical production values.

According to an embodiment, the method comprises establishing a production capability of the solar panel in low light conditions based on the measured current. The establishment of the production capability based on the measured current may be performed by use of a predetermined relationship between electrical production capacity and the measured current. For example, the relationship may have been determined experimentally by measuring the current for a plurality of solar panels having different electrical production capacities and by illuminating the solar panels with the same low light intensity to obtain a single graph or table, or by illuminating the solar panels with a plurality of different low light intensities to obtain a corresponding plurality of graphs or tables for different light intensities.

According to an embodiment the production capability of the solar panel is further based on an installation parameter of the motor operated device. Advantageously, the production capability of the solar panel may be determined based on an installation parameter such as a location on the Earth and/or a north-south orientation of the solar panel. This may be performed by translating the installation parameter to a low light condition and by use of the relationship between electrical production capacity and the measured current for different low light conditions.

According to an embodiment, the test reference is the predetermined electrical consumption value of the motor operated device, e.g. the consumption value corresponding to the minimum function. In this case the comparison based on the measured current and the test reference comprises comparing the production capability with the predetermined electrical consumption value.

Accordingly, by determining the production capability, e.g. for an intended location of the motor operated device, and comparing with the consumption value it is possible to select a solar panel which assures that the motor operated device can operate in a satisfactory way at the given location.

A second aspect of the invention relates to method for producing a motor operated device for use in a window-opening in a building, where the motor operated device comprises an electric motor for operating the motor operated device, a rechargeable electric storage unit for powering the electric motor, and a solar panel for charging the rechargeable electric storage unit, where the method comprises
- performing the method according to the first aspect, and
- assembling the motor operated device using the selected solar panel.

A third aspect of the invention relates to a motor operated device for use in a window-opening in a building produced according to the second aspect.

### Description of the drawings

Embodiments of the invention will be described, by way of example only, with reference to the drawings, in which
Fig. 1a shows an example of a motor operated roof window,
Fig. 1b shows an example of a motor operated outside awning blind,
Fig. 2 shows a motor operated screening device or window,
Fig. 3 shows a test setup for performing a method for selecting a solar panel for the production of a motor operated screening device or window,
Fig. 4 shows a graph illustrating a relationship between a measured current of the solar panel and a power produced at a given low light intensity, where the graph is used for testing the power production capability of solar panels at low light intensities, and
Fig. 5 shows an equivalent circuit of a solar cell.

### Description of embodiments

Embodiments of the invention relate to motor operated screening devices 100, motor operated windows or motor operated window systems having a connected, e.g. integrated, screening device 100. These windows and screening devices are referred to as motor operated devices 190 for window-openings in a building. The building may be any house, office building or other. Examples described herein mainly refer to screening devices 100. However, all examples equally apply to other motor operated devices 190.

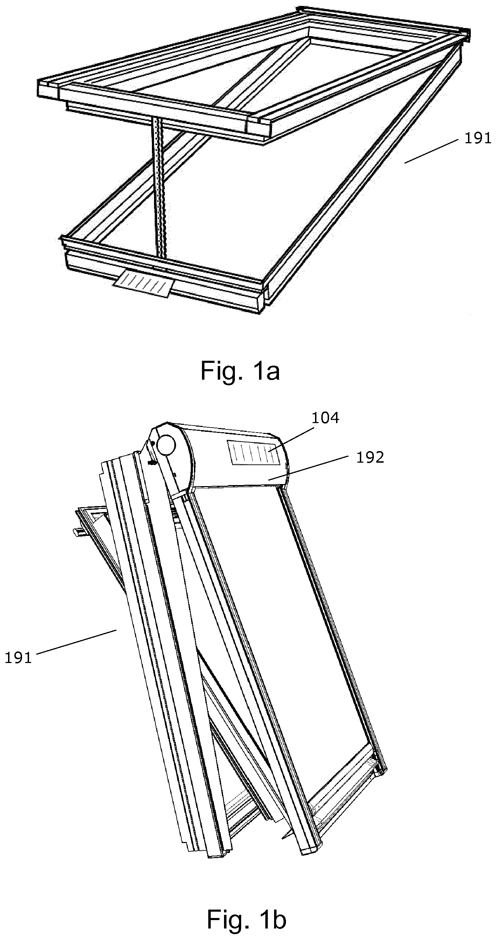

Fig. 1a shows an example of a motor operated window 191 in the form of a motor operated roof window. Fig. 1b shows an example of a motor operated screening device 100 in the form of an outside awning blind 192. The outside awning blind 192 is connected to a roof window which may be a motor operated roof window 191. Fig. 1b also shows the solar panel 104 for powering the awning blind 192.

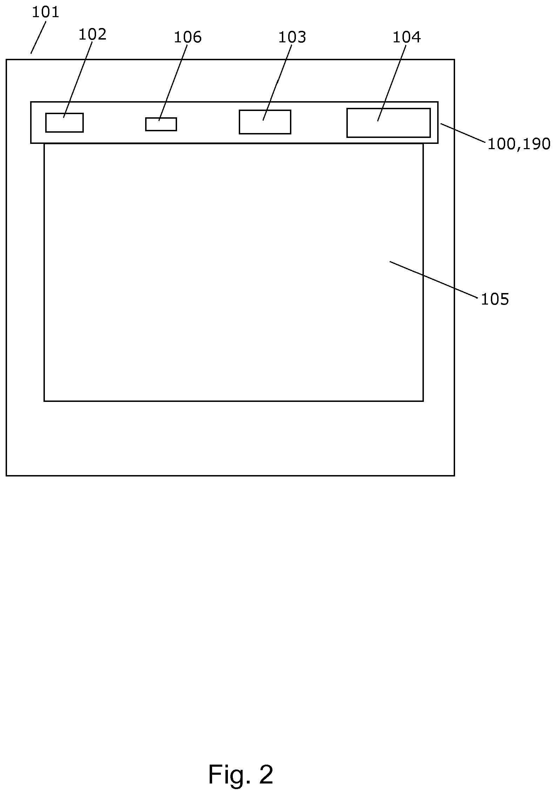

Fig. 2 shows a motor operated screening device 100 for screening an opening such as a window-opening 101 of a building, e.g. to provide shielding for the sun or to reduce transmission of heat energy through the opening.

The screening device 100 device comprises an electric motor 102 for operating the screening device 100, a rechargeable electric storage unit 103 for powering the electric motor and a solar panel 104 for charging the rechargeable electric storage unit 103.

As noted, the present invention also relates to motor operated windows for openings 101 where the motor operated windows also comprises an electric motor 102 for operating the window, e.g. for opening and closing the window. The motor operated window also comprises a rechargeable electric storage unit 103 for powering the motor 102 and a solar panel 104 for charging the storage unit. The motor operated window is not illustrated.

Further as noted, the present invention also relates to a combination of a motor operated window and a motor operated screening device 101 where the both the window and the screening device comprises an electrical motor 102. The combination of the motor operated window and the motor operated screening device 101 may comprise a single rechargeable electric storage unit 103 or individual storage units for both units for powering the motors 102. Similarly, the combination of the motor operated window and the motor operated screening device 101 may comprise a single solar panel 104 or individual solar panels 104 for charging the one or more storage units 103.

The rechargeable electric storage unit 103 may by constituted by any type of rechargeable batteries or other storage unit 103 capable of receiving and storing electrical energy.

The solar panel 104 may comprise one or more solar cells connected in series and/or in parallel. However, a solar panel with only one solar cell may be sufficient for generating enough electrical energy from incident sunlight for operating the device 190.

The solar panel 104 may use wafer-based crystalline silicon cells, thin-film cells based on cadmium telluride or silicon, dye-sensitized solar cell or other photovoltaic cells. The solar panel 104 has a light receiving face for receiving sunlight.

The motor operated screening device 100 may be any outside or inside screening device suited for screening an opening 101 or window. Examples include outside or inside roller blinds, outside roller shutters, outside awning blinds, venetian blinds and others.

The motor operated window may be any window which can be opened and closed by action of the motor 102 or which offer other motor-operated functions. The motor operated windows may for example be roof windows.

The window or screening device comprises a movable part 105 which can be moved by the motor 102. For a screening device 101, the moveable part may comprise the blind material 105, e.g. shutters or textile, and mechanisms for moving the blind material 105, e.g. rollers. For example, the blind material 105 may be moved up or down. For a motor operated window, the movable part may be a window component which may be moved, e.g. rotated about an axis, to open or close the window.

The motor operated screening device 100 may comprise a data storage member 106, e.g. an electronic storage member such as an RFID circuit or a read-only-memory, or a non-electronic storage member such as a bar-code. The data storage member 106 may contain or store information relevant for the operation of the screening device or window.

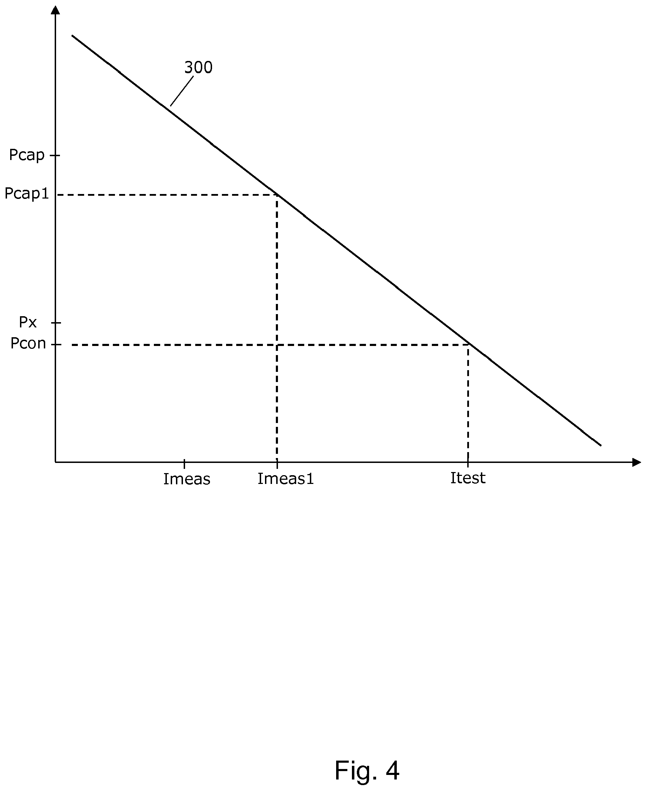

The screening device 100 may have an associated predetermined electrical consumption value (Pcon, Fig. 4), e.g. an energy consumption value, power consumption value or other consumption value. The consumption value corresponds to an electrical energy consumed by the motor 102, e.g. for performing a minimum function of the motor operated device 190.

The associated predetermined electrical consumption value may be available from the data storage member 106. Accordingly, during manufacturing of e.g. a screening device 100, the predetermined electrical consumption value may be obtained from the specific screening device 100.

Alternatively, the associated predetermined electrical energy consumption value may be available from a database. For example, based on an identification number of a screening device 100, which may be available from the data storage member 106 or available in other ways, the predetermined electrical consumption value may be obtained from a specific screening device 100.

The predetermined electrical consumption value Pcon could be the electrical energy consumed by the motor 102 e.g. for displacing the blind material 105 up and/or down along the displacement direction of the window or window-opening 101, for performing a full opening and/or closing operation of the motor operated window, or other minimum function of the motor operated device 190.

In general the minimum function of the window or screening device relates to a predetermined motion of the movable part 105. The predetermined motion of a movable part may be a predetermined displacement operation of the blind material 105, a predetermined opening/closing operation of a window or other predetermined motion.

The solar panel 104 may constitute the only source of energy for charging the rechargeable electric storage unit 103. The amount of electrical energy which can be produced by a solar panel during a given period of time depends on the intensity or power of received sunlight. Accordingly, the amount of energy which can be produced depends on the latitude where the solar panel 104 is used, the time of the year, and other factors. Therefore, a screening device 100 or other device 190 which is used in the northern or southern locations of the Earth, e.g. in the northern Scandinavia, may have problems with producing large amount of energies. Particularly, a motor operate device 190 mounted in a building in a northern part of the Earth so that the solar panel 104 faces north may have problems with producing large amount of energies.

Accordingly, it may be an advantage to know the conversion efficiency of solar panels 104, i.e. the efficiency of converting sunlight to electrical power, in order to verify if a specific motor operated device 190 is able to produce enough electrical energy, e.g. for performing the minimum function. Accordingly, if the efficiency of the solar panel 104 is known, it may be possible to determine if the solar panel 104 is able to produce the predetermined electrical consumption value Pcon or other energy or other energy consumption value. The determination of the power or energy production capability (Pcap, Fig. 4) of the solar panel 104 may be based on an assumed minimum sunlight power and/or an assumed intended location and/or orientation where the motor operated device 190 is installed. The assumed minimum sunlight power may be based on an estimated average light intensity or worst case amount of received light energy at the location.

The assumed intended location and/or orientation may comprise a location where the motor operated device 190 can be used, e.g. locations with latitudes above 59 degrees north and/or orientations where the motor operated device 190 can be used, e.g. orientations towards north.

Different solar panels 104 of the same type, i.e. different solar panels 104 used for the production of same type of motor operated device 190, may have different conversion efficiencies. Therefore, some solar panels 104 available in a production may be capable for producing enough electrical energy, e.g. enough energy to satisfy the predetermined electrical consumption value Pcon, whereas others are not.

Accordingly, due to the different energy production capabilities of solar panels 104, different intended locations and orientations of motor operated devices 190 and different energy requirements (e.g. different predetermined electrical consumption values Pcon) of different configurations of motor operated devices 190, a solution to the problem of ensuring sufficient energy production may be solved by selecting a solar panel 104 for the production of a motor operated device 190 based on the solar panel energy production performance characteristics (e.g. production capability Pcap, Fig. 4).

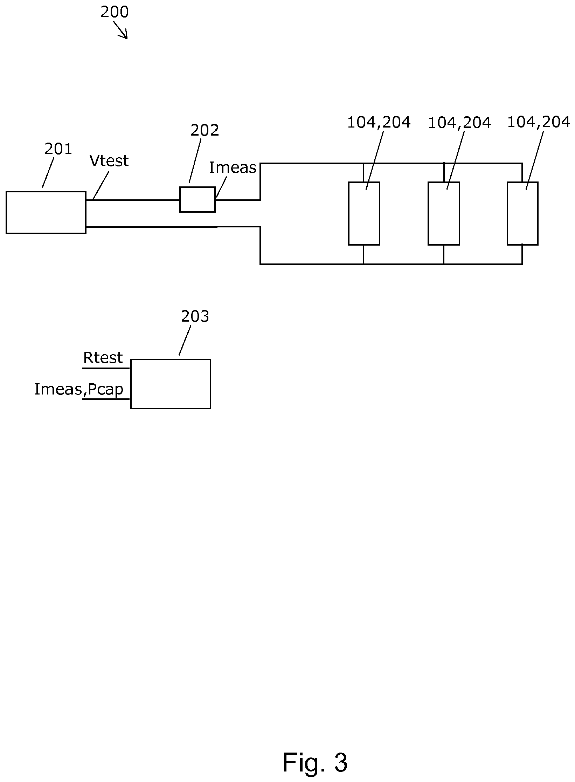

Fig. 3 illustrates a test setup 200 for performing a method for selecting a solar panel 104 for the production of a motor operated device 190. According to the method one or more candidate solar panels 204 are initially picked or chosen from a plurality of available solar panels 204, e.g. solar panels 204 which are available in the production facilities.

It is noted that the candidate solar panels 204 and solar panels 104 are the same type of solar panels. Thus, candidate solar panels 204 refer to solar panels which are chosen to be tested, whereas solar panels 104 refer to solar panels in general, e.g. solar panels which have been tested and satisfy test conditions.

In a first step one or more of the chosen solar panels 104 are then arranged so that light (e.g. a combination of sunlight and ambient lighting) is prohibited or substantially prohibited from entering the light receiving face of the one or more solar panels.

For example, the solar panels 104 may be placed in a dark test box or the solar panels may be placed so that the light receiving face faces an opaque surface, e.g. a table surface to prevent light from entering the light receiving face.

After the solar panels 104 have been arranged so that substantially no current is generated due to incident light, a test voltage Vtest is generated by a voltage generator 201 is applied to the solar cells 104. The test voltage Vtest may be a DC test voltage

Fig. 3 shows that the solar cells 104 under test are arranged in parallel so that all solar cells 104 receive the same test voltage Vtest. The test setup 200 may be arranged so that only one solar cell 104 receives the test voltage at a time. For example, the test setup 200 may be provided with switches (not shown) so that the solar cells 104 are sequentially connected, one at a time, to the voltage generator 201. The switches may be operated manually or automatically, e.g. via control signals provided by the voltage generator 201. The test setup 200 may also be arranged so that only one solar cell 104 can be arranged to receive the test voltage 201.

Simultaneous or subsequent to applying the test voltage Vtest, the electrical current Imeas flowing through the one or more solar panels 104 due to the applied test voltage are measured individually. This may be performed by a single current measurement unit 202 like an amp-meter which measures the current flowing to the solar cells 104 which are sequentially connected, one at a time, to the voltage generator 201, or the single solar cell 104 arranged to receive the test voltage 201. Accordingly, the current Imeas may be measured sequentially for each of the solar panels 104.

Alternatively, if the test setup 200 is arranged so that all solar cells 104 receive the same test voltage Vtest, the current I test may be measured simultaneously or substantially simultaneously by individual current measurement units 202 (not shown) arranged to measure currents flowing through each of the solar cells 104 connected to the voltage generator 201.

In a next step the measured current Imeas obtained for a single solar cell 104, or a derivative of the measured current Imeas such as the production capability Pcap is compared with a test reference Rtest such as a test current Itest. The comparison may be performed by use of an analogue or digital circuit 203.

The test reference Rtest may be an experimentally obtained reference which has a relationship with the power production efficiency of the solar panel 104 in low light conditions so that - based on the comparison of the measured current Imeas with test reference Rtest - it is possible to determine if the solar panel 104 under test has a power production efficiency which is sufficient to generate enough energy during a predetermined period of time so that the minimum function of the motor operated device 190 can be performed based on stored energy in the electric storage unit 103 of the energy generated during the predetermined period of time.

The low light conditions may refer to the light conditions during a given season, e.g. winter, the light conditions at a given location on the Earth, e.g. at a given latitude, the light conditions present when the solar panel 104 has a given orientation, e.g. faces north, or a combination thereof. In this context light conditions may refer the light intensities or other quantities of available sunlight.

For example, the measured current Imeas may be compared with the test reference Rtest by determining if the measured current Imeas is smaller than the test reference Rtest. If the measured current Imeas is smaller than the test reference, this shows that the solar cell 104 has a sufficiently high power production efficiency, e.g. to ensure that the minimum function can be performed based on energy stored during a specific period during the daylight hours.

Further to the test method described above, the solar panels 104 may be handled one at a time so that one solar panel 104 is arranged in darkness and tested according to the test procedure. Alternatively, a plurality of solar panels 104 is arranged in darkness and tested according to the test procedure.

By the arrangement of the solar panels 104 to substantial prohibit light from entering the light receiving face it is to be understood that a small amount of light may enter the light receiving face so that light is substantially prohibited from entering the light receiving face. The amount of light which may enter the light receiving face depends on characteristics of the solar cell 1 04 and the test voltage. For example, arranging the solar cell 104 so that the light receiving face faces a table surface does allow a small amount of light to enter the light reiving face, but the current generated in this case is normally small enough to not affect the measured current Imeas. Accordingly, by the term "substantially" is understood that the solar cell does not need to be completely shielded from light, but that an amount of light is allowed as long as the current generated from the light does not affect the measured current or does not significantly affect the measured current.

The test reference Rtest may be determined by different methods. According to an embodiment the test reference is determined dependent on a short circuit current parameter of the solar panel 104. The datasheet values for commercial solar panels or cells normally include a short circuit current Isc. The short circuit current is the maximum current of the solar panel 104 which is generated when the output of the solar panel is short circuited. The test reference Rtest may be set to a percentage of the short circuit current Isc, for example a percentage in the range from 0.5 to 10 percent, for example in the range from 1 to 3 percent such as to a value close to or equal to 1.5 percent. The short circuit current Isc may be in the range from 60 to 200 mA. However, the short circuit current Isc depends on the type of the solar panel 104.

Fig. 4 shows a graph 300 illustrating a relationship between the measured current Imeas and a power P produced at a given low light intensity. Accordingly, the graph 300 gives the mentioned relationship for a given low light intensity. Other corresponding graphs, e.g. more or less parallel with graph 300, give the relationship for other low light intensities. The relation between a power capability P and a measured current Imeas may be determined experimentally by measuring the current Imeas for a reference solar panel 104 which has a predetermined electrical production value Px at a given light intensity. It is noted that even though the ordinate axis P is referred to as a power axis the, the ordinate axis could have units other than power, e.g. energy. Accordingly, the quantities of the ordinate axis could be in units other than power.

Accordingly, the test reference Rtest may be determined experimentally based on a measured current flowing through a reference solar panel 104 in response to applying the test voltage Vtest, where the reference solar panel has a predetermined electrical production value Px, e.g. a value of the electrical power produced when the solar cell is illuminated with a given light intensity.

For example, the predetermined electrical production value Px may be a power which is sufficient for generating enough energy during a predetermined period of time for performing the minimum function of motor operated device 190, e.g. the predetermined electrical production value Px may be a value sufficient to satisfy the predetermined electrical consumption value Pcon. Accordingly, based on a solar panel 104 which is known to be able to produce sufficient energy for performing the minimum function, the test reference Rtest in the form of a test current Itest can be set to the value of the measured current Imeas. Thus, solar panels under test which generate a measured current Imeas smaller than Itest will have the capability to produce sufficient energy at a given light intensity to satisfy the predetermined electrical consumption value Pcon.

The test reference Rtest may comprise a plurality of experimentally obtained test currents Itest which have been obtained based on measuring the current flowing through reference solar panels in response to applying the test voltage, where the reference solar panels are of the same type and have different electrical production values.

The graph 300 may be obtained based on measured currents Imeas for a plurality of different power production values P, i.e. by measuring current Imeas for different solar panels 104 having different power production values P when illuminated with a given light intensity.

Fig. 4 illustrates that the production capability Pcap of a solar panel 104 illuminated by a low intensity can be determined based on the measured current Imeas by use of the graph 300, e.g. Pcap1 may be the production capability corresponding to the measured current Imeas 1.

The production capability Pcap may represent the production capability in terms of power, energy or other electrical quantities. Similarly, the predetermined electrical production value Px may be a production value in terms of power, energy or other electrical quantities. The predetermined electrical consumption value Pcon may similarly be in terms of power, energy or other units. Accordingly, the electrical quantities Pcap, P, Px and Pcon need not be in units of power as illustrated in Fig. 4, but could be in units of other power, energy or other quantities.

Accordingly, instead of comparing the measured current Imeas with a test reference Rtest in the form of a test current Itest, the production capability Pcap determined based on the measured current Imeas may be compared with a test reference Rtest in the form of a predetermined electrical consumption value Pcon of the motor operated device 190 in order to determine if the solar panel is capable of producing sufficient energy under low light conditions.

The predetermined electrical consumption value Pcon is related to an energy requirement for performing the minimum function of the motor operated device 190. The predetermined electrical consumption value Pcon may be determined based on an energy consumption value for performing the minimum function of the motor operated device 190. For example, the electrical consumption value Pcon may be determined as an average power - over a given period of time - necessary for producing the energy required by a screening device 100 for performing the minimum function.

Since the production capability Pcap depends on the expected light intensity which again depends on the north-south orientation of the motor operated device 190 and the latitudinal location of the motor operated device, a plurality of graphs 300 could be available for different combinations of intended orientations and intended latitudinal locations of the motor operated device 190.

Alternatively, the production capability Pcap determined from a graph 300 may be adjusted dependent on an intended north-south orientation and/or an intended latitudinal location. For example, a graph 300 may be valid for a given average light intensity and, therefore, corresponds to a north-south orientation and/or an intended latitudinal location. If the intended north-south orientation and/or an intended latitudinal location does not correspond with the corresponding parameters of the graph 300, the production capability Pcap of the motor operated device 190 may be adjusted, e.g. extrapolated dependent on a difference between an intended latitudinal location and an actual latitudinal location of a graphs 300.

Accordingly, the production capability Pcap of a solar panel 105 may additionally be based on an installation parameter of the motor operated device, i.e. a north-south orientation parameter and/or a latitude location parameter of the motor operated device 190.

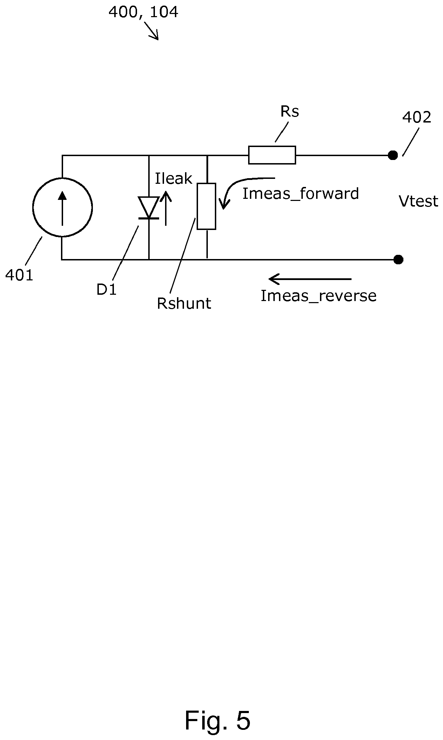

Fig. 5 shows an equivalent circuit 400 for a solar cell. The solar panel 104 may contain one or more solar cells, e.g. a plurality of series connected solar cells. However, for convenience the solar cell in Fig. 5 is used here as an example of a solar panel 104. Accordingly, the solar panel 104 may be modelled on basis of the equivalent circuit 400. The equivalent circuit 400 comprises a current source 401, in parallel with a diode 402 and shunt resistance Rshunt. A series resistance Rs is present in series with the current source 401.

When the solar cell is illuminated, the generated current flows from the current source 401. Fractions of the generated current flow through the diode D1 and the shut resistance Rshunt. The fraction of the generated current which is available via the output 402 is the difference between the generated current from the source 401 and the current flowing through the through the diode D1 and the shut resistance Rshunt.

When the solar panel 104, 204 is arranged so that light is substantially prohibited from entering the light receiving face, the current generated by the current source will be very low, possibly zero or substantially zero.

The test voltage Vtest is applied to the candidate solar panel 104 via the output terminals 402 as shown.

The test voltage may be applied so that the solar panel 105 is forward biased, e.g. for the purpose of measuring the current Imeas_forward through the shunt resistance Rshunt so that the resistive value of the shunt resistance can be determined. For that purpose the DC voltage amplitude Vtest is preferably lower than the forward threshold voltage of the diode D1, e.g. lower than 0.7 V, so that the diode D1 does not conduct current or substantially does not conduct current.

Alternatively, the test voltage may be applied so that the solar panel 105 is reverse biased. The diode D1 will conduct a leakage current Ileak in the reverse direction dependent on the voltage amplitude Vtest. For the purpose of applying the reverse biasing voltage, the voltage amplitude may be in the range of 0.3 to 0.7 V or other voltage below the break-down voltage of the solar cell diode of a single solar cell, i.e. the pn junction of the solar cell. The leakage current Ileak will constitute a fraction of the total reverse biased current Imeas_reverse while the remaining fraction of the total current is the current flowing through the shunt resistance Rshunt.

The leakage current Ileak could be determined in isolation if the shunt resistance Rshunt is known, e.g. on basis of the measured forward current Imeas_forward or on basis of data sheet specifications.

Accordingly, the leakage current Ileak and the shunt resistance Rshunt may be determined from separate measurements of the currents Imeas reverse and Imeas_forward.

It follows that the measured current Imeas may be a measurement of the forward current Imeas_forward and/or the reverse current Imeas_reverse. Thus, according to an embodiment, measuring an electrical current Imeas comprises measuring the forward current Imeas_forward and the reverse current Imeas_reverse. Therefore, the comparison between the measured current Imeas and the test reference Rtest may comprise comparing forward current Imeas forward and the reverse current Imeas reverse with different test references Rtest.

The reverse-leakage current has a relationship with the solar panel's power production capability Pcap, particularly the production capability in low light conditions, i.e. where the solar panel 104 is illuminated with a light intensity which only generates a fraction of the nominal power production capability of the solar panel, e.g. a fraction below 20 percent. Thus, a low reverse-leakage current Ileak indicates that the solar panel 104 has good low light power production capability Pcap.

Accordingly, the measured current Imeas may be used for determining the leakage current Ileak which can be compared with Rtest according to the previously described principles.

The shunt resistance Rshunt also has a relationship with the solar panel's power production capability Pcap, particularly the performance under low light conditions since under low light conditions the current through the shunt resistance constitutes a larger fraction of the total current generated by the current generator 401.

Accordingly, due to the relationship between the shunt resistance Rshunt and the measured current Imeas, e.g. the measured reverse current Imeas reverse or the measured forward current Imeas forward, the measured current Imeas may be compared with Rtest in order to assess the low light power production capability.

The current Imeas reverse includes the current component Ileak and the current through the shunt resistance Rshunt. Since low values of both Ileak and the current through the shunt resistance indicates improved production capabilities in low light conditions, the measured current Imeas induced due to a reverse biasing voltage Vtest may be compared with the test reference Rtest in order to assess if the solar panel can be selected for the purpose of producing a motor operated device 190.

If the solar panel 104 comprises two or more series connected solar cells, the applied test voltage Vtest is divided across the cells of the panel. Accordingly, the reverse voltage amplitude (e.g. in the range of 0.3 to 0.7 V per cell), or the forward voltage amplitude (e.g. below 0.7 V per cell) may be up-scaled proportionally with the number of solar cells in a solar panel 104. Thus, the principles for determining the measured current Imeas and comparing with Rtest apply both for solar panels 104 configured with a single solar cell and for solar panels configured with a plurality of solar cells.

In summary the invention relates to a method for producing solar powered screening devices or windows which comprises a motor for operating the device. The motor is powered via a battery and the battery is charged by a solar panel. In order to ensure that the solar panel is capable of producing sufficient energy, particularly when the screening device or window is installed at a location where the available solar energy is low, the solar panel is selected according to a test procedure. According to the test procedure at test voltage is applied to the solar panel and the resulting current is compared with the reference in order to find solar panels having sufficient conversion efficiency. The amplitude of the measured current depends on the efficiency, particularly in low light conditions.

## Claims

1. A method for selecting a solar panel (104) for the production of a motor operated device (190) for use in a window-opening (101) in a building, where the motor operated device comprises an electric motor (102) for operating the motor operated device (190), a rechargeable electric storage unit (103) for powering the electric motor, and the solar panel (104) for charging the rechargeable electric storage unit, the method comprises
- choosing a candidate solar panel (204) from a plurality of available solar panels,
- arranging the candidate solar panel (204) so that light is substantially prohibited from entering a light receiving face of the candidate solar panel (204),
- applying a test voltage (Vtest) to the candidate solar panel (204),
- measuring an electrical current (Imeas) flowing through the candidate solar panel (204), where the current is induced by the test voltage, and
- conditioned on a result of a comparison performed based on the measured current (Imeas) and a test reference (Rtest), selecting the candidate solar panel (204) for the production of the motor operated device (190).

2. A method according to claim 1, where the motor operated device (190) has an associated predetermined electrical consumption value (Pcon) for performing a minimum function of the motor operated device (190).

3. A method according to claim 2, where the minimum function is a predetermined operation of the motor operated device, and where the electric motor is arranged to drive the predetermined operation.

4. A method according to claim 2 or 3, where the predetermined electrical consumption value (Pcon) is available from a storage member (106) comprised by the motor operated device (190).

5. A method according to any of the preceding claims, where the motor operated device (190) comprises a movable part (105) which can be driven by the motor (102), and where the minimum function of the motor operated device (190) relates to a predetermined motion of the movable part (105).

6. A method according to any of the preceding claims, where the test reference (Rtest) is a test current (Itest).

7. A method according to claim 6, where the test current (Itest) is determined dependent on a short circuit current parameter (Isc) of the solar panel (104).

8. A method according to claim 6, where the test current (Itest) is in the form of an experimentally obtained test current which has been obtained based on measuring the current (Imeas) flowing through a reference solar panel (104) in response to applying the test voltage (Vtest), where the reference solar panel has a predetermined electrical production value (Px).

9. A method according to claim 8, where the predetermined electrical production value (Px) represents the electrical production when the solar panel (104) is illuminated with a given light intensity.

10. A method according to any of claims 8-9, where the predetermined electrical production value (Px) is sufficient for generating enough energy during a predetermined period of time for performing the minimum function of the motor operated device (190).

11. A method according to any of the preceding claims, where the method comprises establishing a production capability (Pcap) of the solar panel (104) in low light conditions based on the measured current (Imeas).

12. A method according to claim 11, where the production capability (Pcap) of the solar panel is further based on an installation parameter of the motor operated device.

13. A method according to claim 11 or 12, where the comparison performed based on the measured current (Imeas) and the test reference (Rtest) comprises comparing the production capability (Pcap) with the predetermined electrical consumption value (Peon).

14. A method for producing a motor operated device (190) for use in a window-opening (101) in a building, where the motor operated device (190) comprises an electric motor (102) for operating the motor operated device (190), a rechargeable electric storage unit (103) for powering the electric motor, and a solar panel (104) for charging the rechargeable electric storage unit, where the method comprises
- performing the method according to any of claims 1-13,
- assembling the motor operated device (190) using the selected solar panel.

## Patentansprüche

1. Verfahren zum Auswählen eines Solarmoduls (104) für die Herstellung einer motorbetriebenen Vorrichtung (190) für die Verwendung in einer Fensteröffnung (101) in einem Gebäude, wobei die motorbetriebene Vorrichtung Folgendes umfasst: einen Elektromotor (102) für den Betrieb der motorbetriebenen Vorrichtung (190), eine wiederaufladbare elektrische Speichereinheit (103) für die Versorgung des Elektromotors und das Solarmodul (104) zum Laden der wiederaufladbaren elektrischen Speichereinheit, wobei das Verfahren Folgendes umfasst:
- Aussuchen eines möglichen Solarmoduls (204) aus einer Vielzahl verfügbarer Solarmodule,
- Anordnen des möglichen Solarmoduls (204) derart, dass im Wesentlichen verhindert wird, dass Licht auf eine licht-aufnehmende Seite des möglichen Solarmoduls (204) fällt,
- Anlegen einer Testspannung (Vtest) an das mögliche Solarmodul (204),
- Messen eines elektrischen Stroms (Imeas), der durch das mögliche Solarmodul (204) fließt, wobei der Strom durch die Testspannung verursacht ist, und
- in Abhängigkeit von einem Ergebnis eines ausgeführten Vergleiches basierend auf dem gemessenen Strom (Imeas) und einer Testreferenz (Rtest), Auswählen des möglichen Solarmoduls (204) für die Herstellung der motorbetriebenen Vorrichtung (190).

2. Verfahren nach Anspruch 1, wobei die motorbetriebene Vorrichtung (190) einen zugehörigen vorbestimmten elektrischen Verbrauchswert (Pcon) hat, um eine minimale Funktion der motorbetriebenen Vorrichtung (190) auszuführen.

3. Verfahren nach Anspruch 2, wobei die minimale Funktion eine vorbestimmte Aktion der motorbetriebenen Vorrichtung ist und wobei der Elektromotor dafür eingerichtet ist, die vorbestimmte Aktion anzutreiben.

4. Verfahren nach Anspruch 2 oder 3, wobei der vorbestimmte elektrische Verbrauchswert (Pcon) aus einem Speicherelement (106) verfügbar ist, das in der motorbetriebenen Vorrichtung (190) enthalten ist.

5. Verfahren nach einem der vorhergehenden Ansprüche, wobei die motorbetriebene Vorrichtung (190) ein bewegliches Teil (105) umfasst, das durch den Motor (102) angetrieben werden kann, und wobei die minimale Funktion der motorbetriebenen Vorrichtung (190) eine vorbestimmte Bewegung des beweglichen Teils (105) betrifft.

6. Verfahren nach einem der vorhergehenden Ansprüche, wobei die Testreferenz (Rtest) ein Teststrom (Itest) ist.

7. Verfahren nach Anspruch 6, wobei der Teststrom (Itest) in Abhängigkeit von einem Kurzschlussstromparameter (Isc) des Solarmoduls (104) bestimmt wird.

8. Verfahren nach Anspruch 6, wobei der Teststrom (Itest) in der Form eines experimentell erhaltenen Teststroms gegeben ist, der basierend auf der Messung des Stroms (Imeas) erhalten wurde, der durch ein Referenzsolarmodul (104) in Reaktion auf das Anlegen der Testspannung (Vtest) fließt, wobei das Referenzsolarmodul einen vorbestimmten elektrischen Ertragswert (Px) hat.

9. Verfahren nach Anspruch 8, wobei der vorbestimmte elektrische Ertragswert (Px) den elektrischen Ertrag repräsentiert, wenn das Solarmodul (104) mit einer gegebenen Lichtintensität beleuchtet wird.

10. Verfahren nach einem der Ansprüche 8 bis 9, wobei der vorbestimmte elektrische Ertragswert (Px) ausreichend ist, um genug Energie während einer vorgegebenen Zeitspanne zu erzeugen, um die minimale Funktion der motorbetriebenen Vorrichtung (190) auszuführen.

11. Verfahren nach einem der vorhergehenden Ansprüche, wobei das Verfahren das Ermitteln einer Ertragsfähigkeit (Pcap) des Solarmoduls (104) unter Schwachlichtbedingungen basierend auf dem gemessenen Strom (Imeas) umfasst.

12. Verfahren nach Anspruch 11, wobei die Ertragsfähigkeit (Pcap) des Solarmoduls außerdem auf einem Installationsparameter der motorbetriebenen Vorrichtung basiert.

13. Verfahren nach Anspruch 11 oder 12, wobei der basierend auf dem gemessenen Strom (Imeas) und der Testreferenz (Rtest) ausgeführte Vergleich das Vergleichen der Ertragsfähigkeit (Pcap) mit dem vorbestimmten elektrischen Verbrauchswert (Pcon) umfasst.

14. Verfahren zum Herstellen einer motorbetriebenen Vorrichtung (190) zur Verwendung in einer Fensteröffnung (101) in einem Gebäude, wobei die motorbetriebene Vorrichtung (190) Folgendes umfasst: einen Elektromotor (102) für den Betrieb der motorbetriebenen Vorrichtung (190), eine wiederaufladbare elektrische Speichereinheit (103) für die Versorgung des Elektromotors und das Solarmodul (104) zum Laden der wiederaufladbaren elektrischen Speichereinheit, wobei das Verfahren Folgendes umfasst:
- Ausführen des Verfahrens nach einem der Ansprüche 1 bis 13,
- Zusammenbauen der motorbetriebenen Vorrichtung (190) unter Verwendung des ausgewählten Solarmoduls.

## Revendications

1. Procédé de sélection d'un panneau solaire (104) pour la production d'un dispositif à moteur (190) destiné à être utilisé dans une ouverture de fenêtre (101) dans un bâtiment, où le dispositif à moteur comprend un moteur électrique (102) pour faire fonctionner le dispositif à moteur (190), une unité de stockage électrique rechargeable (103) pour alimenter le moteur électrique, et le panneau solaire (104) pour charger l'unité de stockage électrique rechargeable, le procédé comprend
- le choix d'un panneau solaire candidat (204) à partir d'une pluralité de panneaux solaires disponibles,
- l'agencement du panneau solaire candidat (204) de sorte que la lumière soit sensiblement empêchée de pénétrer dans une face de réception de lumière du panneau solaire candidat (204),
- l'application d'une tension de test (Vtest) au panneau solaire candidat (204),
- la mesure d'un courant électrique (Imeas) circulant à travers le panneau solaire candidat (204), où le courant est induit par la tension de test, et
- en fonction d'un résultat d'une comparaison réalisée sur la base du courant mesuré (Imeas) et d'une référence de test (Rtest), la sélection du panneau solaire candidat (204) pour la production du dispositif à moteur (190).

2. Procédé selon la revendication 1, où le dispositif à moteur (190) a une valeur de consommation électrique (Pcon) prédéterminée associée pour réaliser une fonction minimale du dispositif à moteur (190).

3. Procédé selon la revendication 2, où la fonction minimale est un fonctionnement prédéterminé du dispositif à moteur, et où le moteur électrique est agencé pour commander le fonctionnement prédéterminé.

4. Procédé selon la revendication 2 ou 3, où la valeur de consommation électrique (Pcon) prédéterminée est disponible à partir d'un élément de stockage (106) constitué par le dispositif à moteur (190).

5. Procédé selon l'une quelconque des revendications précédentes, où le dispositif à moteur (190) comprend une partie mobile (105) qui peut être entraînée par le moteur (102), et où la fonction minimale du dispositif à moteur (190) concerne un mouvement prédéterminé de la partie mobile (105).

6. Procédé selon l'une quelconque des revendications précédentes, où la référence de test (Rtest) est un courant de test (Itest).

7. Procédé selon la revendication 6, où le courant de test (Itest) est déterminé en fonction d'un paramètre de courant de court-circuit (Isc) du panneau solaire (104).

8. Procédé selon la revendication 6, où le courant de test (Itest) se présente sous la forme d'un courant de test obtenu expérimentalement qui a été obtenu sur la base de la mesure du courant (Imeas) circulant à travers un panneau solaire (104) de référence en réponse à l'application de la tension de test (Vtest), où le panneau solaire de référence a une valeur de production électrique (Px) prédéterminée.

9. Procédé selon la revendication 8, où la valeur de production électrique (Px) prédéterminée représente la production électrique quand le panneau solaire (104) est éclairé avec une intensité de lumière donnée.

10. Procédé selon l'une quelconque des revendications 8 et 9, où la valeur de production électrique (Px) prédéterminée est suffisante pour générer assez d'énergie pendant une période prédéterminée pour réaliser la fonction minimale du dispositif à moteur (190).

11. Procédé selon l'une quelconque des revendications précédentes, où le procédé comprend l'établissement d'une capacité de production (Pcap) du panneau solaire (104) dans des conditions de faible lumière sur la base du courant mesuré (Imeas).

12. Procédé selon la revendication 11, où la capacité de production (Pcap) du panneau solaire se fonde en outre sur un paramètre d'installation du dispositif à moteur.

13. Procédé selon la revendication 11 ou 12, où la comparaison réalisée sur la base du courant mesuré (Imeas) et de la référence de test (Rtest) comprend la comparaison de la capacité de production (Pcap) à la valeur de consommation électrique (Pcon) prédéterminée.

14. Procédé de production d'un dispositif à moteur (190) destiné à être utilisé dans une ouverture de fenêtre (101) dans un bâtiment, où le dispositif à moteur (190) comprend un moteur électrique (102) pour faire fonctionner le dispositif à moteur (190), une unité de stockage électrique rechargeable (103) pour alimenter le moteur électrique, et un panneau solaire (104) pour charger l'unité de stockage électrique rechargeable, où le procédé comprend
- la réalisation du procédé selon l'une quelconque des revendications 1 à 13,
- le montage du dispositif à moteur (190) en utilisant le panneau solaire sélectionné.
